(19) Europäisches Patentamt
European Patent Office
Office européen des brevets

(11) Publication number: **0 511 475 A1**

# EUROPEAN PATENT APPLICATION

(21) Application number: **92103868.3**

(22) Date of filing: **06.03.92**

(51) Int. Cl.⁵: **C08L 67/02**, C08K 7/00,
//(C08L67/02,23:08,23:08)

(30) Priority: **08.03.91 JP 68895/91**

(43) Date of publication of application:
**04.11.92 Bulletin 92/45**

(84) Designated Contracting States:
**DE FR GB NL**

(71) Applicant: **NIPPON PETROCHEMICALS COMPANY, LIMITED**
**3-1, Uchisaiwaicho 1-chome Chiyoda-ku Tokyo(JP)**

(72) Inventor: **Hayasaka, Kentaro**
**2-18-8, Mafune**
**Kisarazu-shi, Chiba-ken(JP)**
Inventor: **Suga, Katsufumi**
**3-35-2, Ohkubo, Kohnan-ku**
**Yokohama-shi, Kanagawa-ken(JP)**
Inventor: **Yoshinaga, Yoshihiro**
**2-17-5, Kawanakajima, Kawasaki-ku**
**Kawasaki-shi, Kanagawa-ken(JP)**

(74) Representative: **Strehl, Schübel-Hopf, Groening**
**Maximilianstrasse 54 Postfach 22 14 55**
**W-8000 München 22(DE)**

(54) **Polyester resin composition.**

(57) According to the present invention, there is provided an olefinic copolymer-containing thermoplastic aromatic polyester resin composition having a good moldability, low-temperature impact resistance while retaining the good heat resistance of aromatic polyester resin by a simple melt-blending process. The polyester resin composition comprises the following components in a specific amount respectively:

component (A) of an aromatic polyester resin;

component (B) of an olefinic copolymer resin composed of an olefinic monomer, unsaturated acid glycidylester monomer and unsaturated acid alkylester monomer; and

component (C) of a low-molecular weight ethylene/$\alpha,\beta$-unsaturated acid/$\alpha,\beta$-unsaturated acid alkylester copolymer resin having a viscosity average molecular weight of 1,000 to 15,000.

The impact strength of the secondary fabricate does not deteriorate after annealing the primary fabricate made from the composition of the present invention. The compositions are widely used for the manufacture of automobile parts, electrical and electronic parts, thermal resistant containers, industrial parts, and the like.

## BACKGROUND OF THE INVENTION

(1) Field of the Invention

The present invention relates to a polyester resin composition having an excellent impact resistance. More particularly, the present invention relates to a polyester resin composition having an excellent low-temperature impact resistance, moldability, appearance in terms of surface gloss and flow mark, delamination resistance, and the like.

(2) Description of the Prior Art

Thermoplastic, aromatic polyester resins such as polybutyleneterephthalates, polyethyleneterephthalates, and the like are excellent in mechanical and electrical properties, stiffness, heat resistance, weatherability, oil and chemical resistance, and dimensional stability, and widely used for various parts of machines, electric instruments, automobiles, and construction materials. Various additives have been known to modify the properties of aromatic polyester resins.

However, aromatic polyester resins have the following defect:

When the resin is heated to a molding temperature of about 250°C or higher, the melt viscosity is lowered rapidly owing to a decrease in molecular weight caused by partial decomposition of the polymer, resulting in an impairment to mechanical properties. The defect is markedly exhibited in the injection molding step owing to exposure to a high temperature for a relatively long period of time.

A fatty acid metallic salt or an ionomer resin is added to improve the defect by accerlating the crystallization of the aromatic polyester resin. In this case, the properties such as impact resistance or heat resistance impairs unpreferably. On the other hand, an ethylene-glycidylmethacrylate copolymer resin is added to the aromatic polyester resin to improve the impact resistance (Japanese Patent Publication Nos. 58-47419 and 59-28223). However, the addition of the copolymer has an adverse effect on the flowability or moldability of the resulting composition. Moreover, by merely combining these blend resins or additives, it is difficult to improve simultaneously both the moldability and impact resistance, low temperature impact resistance in particular.

The inventors of the present invention have proposed a method for simultaneously improve the moldability and impact resistance, low-temperature impact strength in particular (Japanese Patent Provisional Publication No. 122158/91), wherein an ethylene-alkyl(meth )acrylate copolymer is further added to the polyester resin composition containing an ethylene-glycidylmethacrylate copolymer resin. In this case, the appearance of molded articles deteriorates in terms of surface gloss, flow mark or delamination resistance.

## SUMMARY OF THE INVENTION

Accordingly, the principal object of the present invention is to provide a polyester resin composition having an improved flowability (i.e. moldability), appearance and delamination resistance of molded articles, and low temperature impact resistance in particular, while retaining the good impact and heat resistance of aromatic polyester resin.

After intensive investigations of blend resins for solving these problems, the inventors have found that the intended object can be attained by blending the following components in a specific amount respectively:

component (A) of an aromatic polyester resin;

component (B) of an olefin/$\alpha,\beta$-unsaturated acid glycidylester/$\alpha,\beta$-unsaturated acid alkylester copolymer resin; and

component (C) of a specific low-molecular weight ethylene/ $\alpha,\beta$-unsaturated acid/$\alpha,\beta$-unsaturated acid alkylester copolymer resin.

According to a first aspect of the invention, there is provided a polyester resin composition, wherein the composition comprises

component (A) of an aromatic polyester resin in an amount of 50 to 99 % by weight;

component (B) of an olefinic copolymer resin having a melt index of 0.1 to 100 g/10 min. in an amount of 1 to 50 % by weight, the olefinic copolymer resin being composed of 80 to 99.9 % by mole of an olefinic monomer unit (b1), 0.1 to 20 % by mole of an $\alpha,\beta$-unsaturated acid glycidylester monomer unit (b2), and 0 to 19.9 % by mole of an $\alpha,\beta$-unsaturated acid alkylester or vinyl ester monomer unit (b3); and

component (C) of a low-molecular weight ethylene/$\alpha,\beta$-unsaturated acid/$\alpha,\beta$-unsaturated acid alkylester copolymer resin having a viscosity average molecular weight of 1,000 to 15,000 in an amount of 0.1 to 15 parts by weight, based on 100 parts by weight of the aforesaid resins (A) + (B), the low-molecular weight copolymer being composed of 80 to 99.5 % by mole of an ethylene monomer unit (c1), a total of 0.5 to 20 % by mole of an $\alpha,\beta$-unsaturated acid monomer unit and an $\alpha,\beta$-unsaturated acid alkylester monomer unit (c2).

According to a second aspect of the invention, there is provided a polyester resin composition in accordance with the first aspect of the invention, wherein the composition further comprises

component (E) of an inorganic filler in an amount of 1 to 200 parts by weight, based on 100 parts by weight of the aforesaid resins (A) + (B).

## DETAILED DESCRIPTION OF THE INVENTION

The component (A) of polyester resin used in the present invention is a polyester resin having aromatic rings in the repeating units of the molecules, and is a polymer or copolymer obtained by condensation polymerization of an aromatic dicarboxylic acid or its ester-forming derivative with a diol or its ester-forming derivative.

Examples of the aromatic dicarboxylic acid include terephthalic acid, isophthalic acid, phthalic acid, 2,6-naphthalenedicarboxylic acid, 1,5-naphthalenedicarboxylic acid, bis(p-carboxyphenyl)methane, anthracene dicarboxylic acid, 4,4-diphenyl ether dicarboxylic acid, 1,2-bis (phenoxy) ethane-4,4'- dicarboxylic acid, ester-forming derivatives thereof, and the like.

Examples of the diol used in the present invention include aliphatic diols having 2 to 10 carbon atoms such as ethylene glycol, propylene glycol, 1,4-butane diol, neopentyl glycol, 1,4-pentane diol, 1,6-hexane diol, decamethylene diglycol, cyclohexane diol, and the like.

Other examples of the diol include long-chain glycols having a molecular weight of about 400 to 6,000 such as polyethylene glycols, poly-1,3-propylene glycols, polytetramethylene glycols, and mixtures thereof.

Examples of the aromatic polyester resin include polyethylene terephthalates, polypropylene terephthalates, polybutyleneterephthalates, polyhexamethyleneterephthalates, polyethylene-2,6-naphthalates, polyethylene-1,2-bis (phenoxy) ethane-4,4'-dicarboxylates, with the preferred ones being polyethylene terephthalates and polybutylene terephthalates.

The intrinsic viscosity of the aromatic polyester resin is determined at a temperature of 25 ± 0.1°C by use of a 100 ml-trifluoroacetic acid (25)-methylene chloride (75) resin solution containing 0.32 g. of the resin. An intrinsic viscosity range of from 0.4 to 4.0 dl/g. is preferred.

When the intrinsic viscosity is less than 0.4 dl/g, an influence of the aromatic polyester resin on mechanical strength is not exerted sufficiently. When it is more than 0.4 dl/g., flowability of the blend impairs, and surface gloss of molded articles falls off unpreferably.

Examples of the component (B) of olefinic copolymer used in the present invention include a three- or multi-component copolymer prepared by a high-pressure radical polymerization of an olefinic monomer (b1), an $\alpha,\beta$-unsaturated acid glycidylester monomer (b2) and an $\alpha,\beta$-unsaturated acid alkylester monomer (b3). A typical example of these copolymer (B) include a copolymer composed of 80 to 99.9 % by mole of an olefinic monomer, 0.1 to 20 % by mole of an $\alpha,\beta$-unsaturatedacid glycidylester monomer, and 0 to 19.9 % by mole of an $\alpha,\beta$-unsaturated acid alkylester monomer.

Examples of the aforesaid olefinic monomer unit (b1) include those selected from the group consisting of ethylene, propylene, butene-1, isobutene, hexene-1, decene-1, octene-1, and mixtures thereof, with ethylene being preferred.

Examples of the aforesaid $\alpha,\beta$-unsaturated acid glycidylester monomer (b2) include glycidyl acrylate, glycidyl methacrylate, itaconic acid monoglycidylester, butenetricarboxilic acid mono-, di- and triglycidylesters, $\alpha$-chloroallyl glycidylester, maleic acid glycidylester, crotonic acid glycidylester, fumaric acid glycidylester, and the like, with glycidyl(meth )acrylate being preferred.

Examples of the aforesaid $\alpha,\beta$-unsaturated acid alkylester monomer or vinyl ester monomer (b3) include (meth )acrylic acid esters such as methyl, ethyl, propyl, butyl, 2-ethylhexyl, cyclohexyl, dodecyl, and octadecyl ester; monoesters or diesters of maleic acid, maleic anhydride, itaconic acid or fumaric acid; vinyl esters such as vinyl propionate, vinyl acetate, vinyl capronate, vinyl caprylate, vinyl laurate, vinyl stearate, and vinyl trifluoroacetate, with (meth )acrylate and vinyl acetate being preferred.

More concrete examples of the aforesaid olefinic copolymer include an ethylene/glycidylmethacrylate/ethylacrylate copolymer, an ethylene/propylene/glycidylmethacrylate/ethylacrylate copolymer, an ethylene/glycidylacrylate/methylmethacrylate copolymer, an ethylene/glycidylacrylate/ethylacrylate copolymer, with ethylene/glycidylmethacrylate/ethylacrylate copolymer being preferred.

The melt index of the olefinic copolymer is 0.1 to 100 g/10min., preferably 0.5 to 90 g/10min., more preferably 1.0 to 70 g/10min.

The three-component or multi-component copolymer is prepared in the following manner:

In a high-pressure vessel or tubular reactor, a monomer mixture is polymerized simultaneously or stepwisely at a pressure of 500 to 4,000 bar ($Kg/cm^2$) preferably 1,000 to 3,500 bar ($Kg/cm^2$) and a temperature of 50 to 400°C, preferably 100 to 350°C in the presence of 0.0001 to 1 % by weigh of a radical polymerization initiator, based on the total weight of the monomers, a chain transfer agent and optional auxiliary agent, wherein each monomer concentration in the monomer mixture is so regulated that the resulting polymer can contain 80 to 99.9 % by mole of ethylene, 0.1 to 20 % by mole of glycidyl methacrylate, and 0 to 19.9 % by mole of ethyl acrylate.

Examples of the radical polymerization initiator include conventional initiators such as peroxides, hydroperoxides, azo compounds, amine oxides and oxygen.

Examples of the chain transfer agent include hydrogen, propylene, butene-1, saturated hydrocarbons having 1 to 20 or more of carbon atoms, and halogenated hydrocarbons having 1 to 20 or more of carbon atoms such as ethane, propane, n-butane, isobutane, n-hexane, n-heptane, cycloparaffins, chloroform, $CCl_4$, aliphatic alcohols having 1 to 20 or more carbon atoms such as methanol, ethanol, propanol and isopropanol, saturated aliphatic carbonyl compounds having 1 to 20 or more carbon atoms such as $CO_2$, acetone, methyl ethyl ketone, aromatic compounds such as toluene, diethylbenzenes, and xylenes.

Other examples of the olefinic copolymers of the invention include modified copolymers obtained by addition polymerization of the aforesaid unsaturated acid glycidyl ester monomer and unsaturated acid alkylester monomer with a conventional olefinic homopolymer or olefinic copolymer.

Examples of the preferred conventional olefinic homopolymers or copolymers include a homopolymer such as low-density, high-density and medium-density polyethylenes; a linear low density polyethylene of an ethylene-α-olefin copolymer such as ethylene-propylene copolymers, ethylene-butene-1 copolymers, ethylene-hexene-1 copolymers, ethylene-4-methylpentene-1 copolymers, ethylene-octene-1 copolymers; super low-density polyethylenes; ethylene-propylene copolymer rubbers, ethylene-propylene-diene copolymer rubbers; ethylene-vinyl acetate copolymers; ethylene-(meth)acrylic acid alkylester copolymers.

The component (C) of the low-molecular weight ethylene/α,β-unsaturated acid/α,β-unsaturated acid alkylester copolymer used in the invention is a low-molecular weight copolymer having a molecular weight of 1,000 to 15,000, preferably 3,000 to 12,000.

Typical examples of the low-molecular weight copolymer include ethylene-(meth)acrylic acid-$C_1$ to $C_{12}$ alkyl (meth) acrylate copolymer, the $C_1$ to $C_{12}$ alkyl being methyl, ethyl, propyl, isopropyl or butyl.

The low-molecular weight copolymer is composed of 80 to 99.5 % by mole of ethylene, a total of 0.5 to 20 % by mole, preferably 1.0 to 15 % by mole, more preferably 2.0 to 12 % by mole of (meth)acrylic acid and (meth)acrylic acid alkylester, provided that the mole ratio of (meth)acrylic acid to alkylester is 10 to 90 : 90 to 10.

The rate of reaction of the low-molecular weight copolymer with the aromatic polyester terminal groups increases with an increase in the ratio of (meth)acrylic acid to the acid alkylester, with the result that compatibility of the component (A) with (B) and (C) is improved. As a result, appearance and delamination resistance of molded articles are improved. Conversely, the glass transition temperature is raised with an increase in the ratio, with the result that an improvement effect on impact strength, low-temperature impact strength in particular is ineffective owing to a deterioration in flexibility of the resulting resin composition. Therefore, the ratio of the acid to the alkylester should be selected after due consideration of the specific purpose. Generally, a ratio within the range of from 3 : 1 to 1 : 3 is preferred.

The low-molecular weight ethylene/(meth) acrylic acid/(metha) acrylic acid alkylester copolymer may be prepared economically by thermal cracking of a relatively high-molecular weight ethylene/(meth) acrylic acid alkylester copolymer.

A conventional polymerization process may be also employed.

The relatively high-molecular weight ethylene/(meth) acrylic acid alkylester copolymer used in the invention is an ethylene/(meth) acrylic acid alkylester copolymer having a melt index of 300 g/10min. or less, preferably 100 g/min. or less.

The content of (meth)acrylic acid alkylester unit in the copolymer resin is in an amount of 0.5 to 25 % by mole, preferably 1.5 to 12 % by mole.

The viscosity average molecular weight of the low-molecular weight ethylene copolymer is calculated from the intrinsic viscosity $[\eta]$ represented by the formula:

$$[\eta] = KM^\alpha \ [K = 14.3 \times 10 \ (dl/g), \ \alpha = 0.82]$$

The intrinsic viscosity is measured by use of a decaline resin solution at 135°C.

The method for preparation of the above-described low-molecular weight ethylene-(meth)acrylic acid-(meth)acrylic acid alkylester copolymer resin comprises thermal cracking i.e. degradation of a relatively high-molecular weight ethylene-(meth)acrylic acid alkylester copolymer resin at a pressure of 1 to 50 bar (Kg/cm$^2$), and a temperature of 200 to 500°C in an atmosphere of a non-oxidizing gas. The low-molecular weight copolymer resin obtained has a viscosity average molecular weight of 1,000 to 15,000, and a molecular weight distribution ($M_w/M_n$) of 1 to 15.

Any non-oxidizing gas may be employed, with the preferred one being nitrogen, $CO_2$, argon, helium.

It is preferred to flow the non-oxidizing gas, preferably nitrogen, in the reaction system to evacuate air.

Further, the degradation temperature and pressure for the preparation of the low-molecular weight copolymer depend on the properties of the copolymer employed as raw material such as average molecular weight and degree of cracking. Degradation temperature or pressure for the preparation of the low-molecular weight ethylene/(meth)acrylic acid/(meth) acrylic acid alkylester copolymer having a viscosity average molecular weight of 1,000 to 15,000 may range from 200 to 500°C, preferably from 250 to 420°C, or from 1 to 50 Kg/cm$^2$ G.

When the temperature is less than 200°C, degree of depolymerization is insufficient, and conversely when the temperature is more than 500°C, the resulting low-molecular weight copolymer further degradation rapidly to give monomers of the initial copolymer employed.

The polyester composition according to a first aspect of the present invention comprises component (A) of an aromatic polyester resin in an amount of 50 to 99 % by weight, component (B) of an olefinic copolymer composed of an olefinic monomer, unsaturated acid glycidylester monomer and unsaturated acid alkylester monomer in an amount of 1 to 50 % by weight, and component (C) of a low-molecular weight ethylene/$\alpha,\beta$-unsaturated acid/$\alpha,\beta$-unsaturated acid alkylester copolymer resin having a viscosity average molecular weight of 1,000 to 15,000 in an amount of 0.1 to 15 parts by weight based on 100 parts by weight of the above components (A) + (B).

When each of the components (B) and (C) is in excess of the upper limit, heat resistance impairs unpreferably.

When the amount of component (B) is less than 1.0 % by weight, impact resistance of the resulting resin composition is not improved. When the component (C) is less than 0.1 parts by weight, moldability of the resulting resin composition is not improved.

The composition according to a second aspect of the present invention comprises the aforesaid first polyester resin composition of the present invention, wherein the composition further comprises 1 to 200 parts by weight of an inorganic filler, based on 100 parts by weight of the first composition.

The inorganic filler may be used in granular, lamellar, scaly, needle, spherical, balloon and fibrous forms, and examples of these inorganic fillers include granular fillers such as calcium sulfate, calcium silicate, clay, diatomaceous earth, talc, alumina, silicious sand, glass powder, iron oxide, metallic powder, graphite, silicon carbide, silicon nitride, silica, boron nitride, aluminum nitride and carbon black; lamellar or scaly fillers such as mica, glass plate, sericite, pyrophyllite, metallic foil such as aluminum flake, graphite; balloon fillers such as Shirasu balloon, metallic balloon, glass balloon and pumice; and mineral fibers such as glass fiber, carbon fiber, graphite fiber, whisker, metallic fiber, silicon carbide fiber, asbestos and wollastonite.

When the amount of filler is less than 1 parts by weight, an blending effect of filler is not exerted sufficiently, and when the amount is in excess of 200 parts by weight, impact strength of molded articles deteriorates unpreferably.

The surface of the inorganic filler is preferably treated by use of stearic acid, oleic acid, palmitic acid, a metallic salt thereof, paraffin wax, polyethylene wax or a modified-wax thereof, an organic silane, an organic borane or an organic titanate.

The thermoplastic resin composition of the present invention is manufactured by melting and mixing the above-described components (A) to (E) at a temperature of 150 to 350°C, preferably 180 to 320°C.

When the temperature is less than 150°C, melting and mixing are insufficient and the melting viscosity increases unpreferably, resulting in a phase separation or delamination in layers of molded articles, and inversely, when the temperature is in excess of 350°C, decomposition of the resir to be blended occurs and discoloration is caused unfavorably.

In this invention, olefinic polymer (D), i.e., a homopolymer such as low-density, high-density and medium-density polyethylenes; a linear low density polyethylene of an ethylene-$\alpha$-olefin copolymer such as ethylene-propylene copolymers, ethylene-butene-1 copolymers, ethylene-hexene-1 copolymers, ethylene-4-methylpentene-1 copolymers, ethylene-octene-1 copolymers; super low-density polyethylenes; ethylene-propylene copolymer rubbers; ethylene-propylene-diene copolymer rubbers; ethylene-vinyl acetate copolymers; ethylene-(metha)acrylic acid alkylester copolymers, may be incorporated into the composition in an amount up to 100 parts by weight, based on 100 parts by weight of the components (A) + (B) so as to improve an impact resistance.

In melting and mixing, there may be employed a conventional kneader such as a Bunbury's mixer, a kneader mixer, a kneader extruder, a biaxial extrude or mixing rolls.

In the present invention, various other blend resins or additives may be incorporated, in so far as they do not deviate from the gist of the invention.

Examples of such usable blend resins or additives include a thermoplastic resin such as polyolefin resins, polyvinylchloride resins, polyvinylidenechloride resins, polycarbonate resins, polyamide resins, polyphenyleneether resins, polyphenylenesulfide resins, polysulfone resins; natural rubbers and synthetic rubbers; an inorganic flame retardant such as magnesium hydroxide and aluminum hydroxide; an organic flame retardant such as halogen-type or phosphorus-type retardant; an antioxidant; an ultraviolet inhibitor; a slip agent; a dispersant; a foaming agent; a crosslinking agent; a colorant, and the like.

## EXAMPLES

The following examples will illustrate the invention, which by no means limits the invention.

[Resins employed)

Component (A): a polybutyleneterephthalate (designated by PBT) [trade name: Toray PBT RESIN 1401, a product of Toray Co., Ltd.)

Component (B):

B-1; an ethylene/glycidylmethacrylate/ethylacrylate copolymer (designated by E/GMA/EA) [MFR = 4.5 g/10min., 95.7 % by mole of ethylene, 1.1 % by mole of glycidyl methacrylate, 3.2 % by mole of ethyl acrylate]

B-2; an ethylene/glycidylmethacrylate/ethylacrylate copolymer (designated by E/GMA/EA) [MFR = 3.0 g/10min., 91.9 % by mole of ethylene, 1.2 % by mole of glycidyl methacrylate, 6.9 % by mole of ethyl acrylate]

B-3; an ethylene/glycidylmethacrylate copolymer (designated by E/GMA) [MFR = 4.0 g/10min., 97.9 % by mole of ethylene, 10 % by weight (2.1 % by mole) of glycidyl methacrylate]

B-4; an ethylene/glycidylmethacrylate copolymer (designated by E/GMA) [MFR = 3.0 g/10min., 96.6 % by mole of ethylene, 15 % by weight (3.4 % by mole) of glycidyl methacrylate]

B-5; an ethylene/glycidylmethacrylate/n-butyl acrylate copolymer (designated by E/GMA/nBA) [MFR = 4.0 g/10min., 94.9 % by mole of ethylene, 1.2 % by mole of glycidylmethacrylate, 3,9 % by mole of n-butyl acrylate]

Component C:

The low-molecular weight ethylene copolymers used in the present invention were prepared by the following thermal depolymerization process.

Preparation of C-1;

An ethylene/ethylacrylate copolymer obtained by a high-pressure process having 7.5 % by mole of ethyl acrylate units and a melt index of 20 g/10min., based upon JIS K 7670, was thermally cracked continuously at a maximum temperature of 375°C in the presence of water, giving an ethylene/acrylic acid/ethylacrylate copolymer composed of 93.0 % by mole of ethylene unit, 2.0 % by mole of acrylic acid unit and 5.0 % by mole of ethyl acrylate unit, and having a viscosity average molecular weight, as polyethylene, of 10,000. The viscosity was calculated from the intrinsic viscosity measured by use of a decaline solution at 135 °C.

Preparation of C-2, C-3;

The same procedures as in the preparation of C-1 were repeated with the exception that the maximum temperature was 395°C (C-2) or 410°C (C-3).

Preparation of C-4;

The same procedures as in the preparation of C-1 were repeated with the exception that an ethylene/methylacrylate copolymer obtained by a high-pressure process having 3.5 % by mole of methyl acrylate unit and a melt index of 6.0 g/10min., based upon JIS K 7670, was used and the maximum cracking temperature was 400°C.

The properties of the resultant components C-1 to C-4 are as follows:

C-1: an ethylene/acrylic acid/ethylacrylate copolymer (designated by E/AA/EA) [2.0 % by mole of acrylic acid, 5.0 % by mole of ethyl acrylate, a total of 7 % by mole, a viscosity average molecular weight of 10,000]

C-2: an ethylene/acrylic acid/ethylacrylate copolymer (designated by E/AA/EA) [2.2 % by mole of acrylic acid, 4.8 % by mole of ethyl acrylate, a total of 7 % by mole, a viscosity average molecular weight of 5,000]

C-3: an ethylene/acrylic acid/ethylacrylate copolymer (designated by E/AA/EA) [3.0 % by mole of acrylic acid, 4.0 by mole of ethyl acrylate, a total of 7 % by mole, a viscosity average molecular weight of 3,000]

C-4: an ethylene/methylacrylate copolymer (designated by E/MA) [10 % by weight (3.5 % by mole) of methyl acrylate, a viscosity average molecular weight of 5,000]

Component (D);

D-1; an ethylene/n-butylacrylate copolymer (designated by E/nBA) [MFR = 3.0 g/10min., 19 % by weight of n-butyl acrylate] [trade name; Lucaren A2710H, a product of BASF]

D-2; a super low-density polyethylene (designated by SRX) [MFR = 3.9 g/10min., a density of 0.900 g/cc] [trade name; NISSEKI SOFTREX D9550, a product of Nippon Petrochmicals Co., Ltd.]

D-3; an ethylene/propylene copolymer rubber (desiganted by EPR) [trade name; JSP EP02P, a product of Japan Synthetic Rubber Co., Ltd.]

Component (E):

inorganic filler [glass fiber, 5.0 mm in average length, 10μm in average diameter]

Examples 1 to 14

In melting and mixing the pellets of each resin above-described and an inorganic filler, they were first dry blended and extruded by use of an extruder (Type 15-19, a product of Toshiba Kikai Ltd.) at a cylinder temperature of 250°C and a mold temperature of 500°C, thereby an A.S.T.M. test specimen was prepared. The test results of the determination of notched izod impact strength, and apparent melt viscosity, and thermal deformation temperature are given in Table 1.

Notched Izod Impact Strength: ASTM D256

Deflection Temperature under Load: ASTM D648

| (Appearance) | | |
|---|---|---|
| Flow mark: | ◎<br>○<br>X | not present at all<br>slightly present<br>present |
| Gloss: | ◎<br>○<br>△<br>X | very good<br>good<br>inferior<br>much inferior |

Delamination:

The state of delamination was ranked as follows by visually observing the state of the broken surface of each molded article by use of an adhesive tape method.

◎　　　　not present at all
○　　　　slightly present
X　　　　perceptibly present

Referential Examples 1 to 16

The same procedures as in Example 1 were repeated by use of the following compositions:
(1) A polybutyleneterephthalate resin
(2) A polybutyleneterephthalate resin blend containing an ethylene/glycidylmethacrylate copolymer
(3) A polybutyleneterephthalate blend containing an ethylene/glycidylmethacrylate/ethylacrylate copolymer.
The results are given in Table 1-(a)-1,2 and Table 1-(b)-1,2,3,4.

| Table 1-(a)-1 | A component | | B component | | | C component | | | D component | | | E component | |
|---|---|---|---|---|---|---|---|---|---|---|---|---|---|
| | Design ation | Amount wt% | Design ation | Composition | Amount wt% | Design ation | Compositi on | Amount | Desig nation | Compo sition | Amount | Design ation | Amount |
| Example 1 | PBT | 95 | B-1 | E/GMA/EA | 5 | C-1 | E/AA/EA | 10 | | | | | |
| Example 2 | PBT | 95 | B-1 | E/GMA/EA | 5 | C-2 | E/AA/EA | 10 | | | | | |
| Example 3 | PBT | 95 | B-1 | E/GMA/EA | 5 | C-3 | E/AA/EA | 10 | | | | | |
| Referential Example 1 | PBT | 100 | – | – | – | – | – | – | | | | | |
| Referential Example 2 | PBT | 95 | B-1 | E/GMA/EA | 5 | – | – | – | | | | | |
| Referential Example 3 | PBT | 95 | B-1 | E/GMA/EA | 5 | C-4 | E/MA | 10 | | | | | |
| Example 4 | PBT | 85 | B-1 | E/GMA/EA | 15 | C-1 | E/AA/EA | 5 | | | | | |
| Example 5 | PBT | 85 | B-2 | E/GMA/EA | 15 | C-1 | E/AA/EA | 5 | | | | | |
| Example 6 | PBT | 85 | B-3 | E/GMA | 15 | C-2 | E/AA/EA | 5 | | | | | |
| Example 7 | PBT | 85 | B-4 | E/GMA | 15 | C-2 | E/AA/EA | 5 | | | | | |
| Referential Example 4 | PBT | 80 | B-1 | E/GMA/EA | 20 | – | – | – | | | | | |
| Referential Example 5 | PBT | 80 | B-2 | E/GMA/EA | 20 | – | – | – | | | | | |
| Referential Example 6 | PBT | 80 | B-3 | E/GMA | 20 | – | – | – | | | | | |

| Table 1-(a)-2 | A component | | B component | | | C component | | | D component | | | E component | |
|---|---|---|---|---|---|---|---|---|---|---|---|---|---|
| | Designation | Amount wt% | Designation | Composition | Amount wt% | Designation | Composition | Amount | Designation | Composition | Amount | Designation | Amount |
| Example 8 | PBT | 85 | B-5 | E/GMA/nBA | 15 | C-1 | E/AA/EA | 2 | - | - | - | | |
| Example 9 | PBT | 90 | B-1 | E/GMA/EA | 10 | C-1 | E/AA/EA | 2 | D-1 | E/nBA | 9 | | |
| Example 10 | PBT | 90 | B-1 | E/GMA/EA | 10 | C-2 | E/AA/EA | 4 | D-1 | E/nBA | 8 | | |
| Example 11 | PBT | 90 | B-1 | E/GMA/EA | 10 | C-3 | E/AA/EA | 4 | D-3 | EPR | 8 | | |
| Example 12 | PBT | 90 | B-5 | E/GMA/nBA | 10 | C-2 | E/AA/EA | 5 | D-3 | EPR | 8 | | |
| Example 13 | PBT | 90 | B-5 | E/GMA/nBA | 10 | C-3 | E/AA/EA | 4 | D-2 | SRX | 8 | | |
| Referential Example 7 | PBT | 90 | B-3 | E/GMA | 10 | C-4 | E/MA | 4 | D-1 | E/nBA | 9 | | |
| Referential Example 8 | PBT | 90 | B-3 | E/GMA | 10 | - | - | - | D-1 | E/nBA | 10 | | |
| Referential Example 9 | PBT | 90 | B-3 | E/GMA | 10 | C-4 | E/MA | 4 | D-2 | SRX | 8 | | |
| Referential Example 10 | PBT | 90 | B-3 | E/GMA | 10 | - | - | - | D-2 | SRX | 10 | | |
| Referential Example 11 | PBT | 90 | B-3 | E/GMA | 10 | C-4 | E/MA | 2 | D-3 | EPR | 9 | | |
| Referential Example 12 | PBT | 90 | B-3 | E/GMA | 10 | - | - | - | D-3 | EPR | 10 | | |
| Referential Example 13 | PBT | 90 | B-4 | E/GMA | 10 | C-4 | E/MA | 2 | D-1 | E/nBA | 9 | | |
| Referential Example 14 | PBT | 90 | B-4 | E/GMA | 10 | - | - | - | D-1 | E/nBA | 10 | | |
| Example 14 | PBT | 85 | B-1 | E/GMA/EA | 15 | C-1 | E/AA/EA | 5 | - | - | - | Glass Fiber | 30 |
| Referential Example 15 | PBT | 90 | B-4 | E/GMA | 10 | - | - | - | - | - | - | Glass Fiber | 30 |
| Referential Example 16 | PBT | 90 | B-3 | E/GMA | 10 | C-4 | E/MA | 2 | D-1 | E/nBA | 9 | Glass Fiber | 50 |

EP 0 511 475 A1

| Table 1-(b)-1 | Apparent Viscosity at $10^3sec^{-1}$ of Shear Rate (at 250°C) | Heat Distortion Temperature at 18.6Kgf/m³ (°C) | IZOD Impact Strength | | Appearance | | Surface Delamination (Visually) |
|---|---|---|---|---|---|---|---|
| | | | (Kgfcm/cm) (at 24°C) | 1/4 inch (at -30°C) | Surface Gloss (Visually) | Flow Marks (Visually) | |
| Example 1 | 1800 | 53 | 7.0 | 5.2 | ◉ | ◉ | ○ |
| Example 2 | 1500 | 52 | 6.5 | 4.9 | ◉ | ◉ | ○ |
| Example 3 | 1300 | 52 | 5.4 | 4.4 | ◉ | ◉ | ○ |
| Referential Example 1 | 3000 | 59 | 5.5 | 4.9 | ○ | ◉ | ◉ |
| Referential Example 2 | 3200 | 57 | 8.5 | 5.8 | △ | ○ | × |
| Referential Example 3 | 2000 | 53 | 7.8 | 5.3 | ○ | ○ | × |

| Table 1-(b)-2 | Apparent Viscosity at $10^3\,sec^{-1}$ of Shear Rate (at 250°C) | Heat Distortion Temperature at 18.6Kgf/m³ (°C) | IZOD Impact Strength | | Appearance | | Surface Delamination (Visually) |
|---|---|---|---|---|---|---|---|
| | | | (Kgfcm/cm) (at 24°C) | 1/4 inch (at −30°C) | Surface Gloss (Visually) | Flow Marks (Visually) | |
| Example 4 | 3200 | 55 | 56 | 15 | o | o | o |
| Example 5 | 3400 | 54 | 69 | 14 | o | o | o |
| Example 6 | 3100 | 54 | 25 | 8.5 | o | o | o |
| Example 7 | 4000 | 54 | 32 | 10 | o | o | o |
| Referential Example 4 | 3700 | 53 | 58 | 10 | Δ | o | ● |
| Referential Example 5 | 4800 | 52 | 91 | 15 | Δ | o | ● |
| Referential Example 6 | 5800 | 54 | 18 | 9.0 | Δ | o | ● |

| Table 1-(b)-3 | Apparent Viscosity at 10³sec⁻¹ of Shear Rate (at 250°C) | Heat Distortion Temperature at 18.6Kgf/m³ (°C) | IZOD Impact Strength | | Appearance | | Surface Delamination (Visually) |
|---|---|---|---|---|---|---|---|
| | | | (Kgfcm/cm) (at 24°C) | 1/4 inch (at –30°C) | Surface Gloss (Visually) | Flow Marks (Visually) | |
| Example 8 | 3600 | 54 | 61 | 17 | O | O | O |
| Example 9 | 3550 | 54 | 40 | 12 | O | O | O |
| Example 10 | 3100 | 54 | 36 | 9.1 | O | O | O |
| Example 11 | 3200 | 53 | 42 | 10 | O | O | O |
| Example 12 | 3700 | 52 | 40 | 9.2 | O | O | O |
| Example 13 | 3600 | 53 | 23 | 9.6 | O | O | O |
| Referential Example 7 | 3650 | 53 | 38 | 9.6 | Δ | O | O |
| Referential Example 8 | – | 53 | 41 | 12 | Δ | Δ | O |
| Referential Example 9 | 3100 | 52 | 25 | 8.5 | Δ | O | O |
| Referential Example 10 | 5400 | 52 | 33 | 10 | Δ | Δ | O |
| Referential Example 11 | 3900 | 52 | 48 | 9.9 | Δ | O | O |
| Referential Example 12 | 4200 | 52 | 51 | 12 | Δ | Δ | O |
| Referential Example 13 | 4000 | 54 | 41 | 10 | Δ | O | O |
| Referential Example 14 | 5200 | 54 | 52 | 13 | Δ | Δ | O |

Table 1-(b)-4

| | Apparent Viscosity at $10^3\text{sec}^{-1}$ of Shear Rate (at 250°C) | Heat Distortion Temperature at 18.6Kgf/m³ (°C) | IZOD Impact Strength | | Appearance | | Surface Delamination (Visually) |
|---|---|---|---|---|---|---|---|
| | | | (Kgf·cm/cm) (at 24°C) | 1/4 inch (at −30°C) | Surface Gloss (Visually) | Flow Marks (Visually) | |
| Example 14 | 4100 | 205 | 10 | 8.0 | - | - | - |
| Referential Example 15 | 4500 | 210 | 16 | 12 | - | - | - |
| Referential Example 16 | - | - | 11 | 7.0 | - | - | - |

It will be apparent from the above description and Examples that according to the present invention, there can be provided an olefinic copolymer-containing thermoplastic aromatic polyester resin composition by means of a simple melt-blending process. The polyester composition comprises the following components in an specific amount respectively:

component (A) of an aromatic polyester resin,

component (B) of an olefinic copolymer resin composed of an olefinic monomer, unsaturated acid glycidylester monomer and unsaturated acid alkylester monomer, and

component (C) of a low-molecular weight ethylene/$\alpha,\beta$-unsaturated acid/$\alpha,\beta$-unsaturated acid alkylester copolymer resin having a viscosity average molecular weight of 1,000 to 15,000.

The polyester resin composition of the present invention has a good moldability and low-temperature impact strength while retaining the good heat resistance of aromatic polyester resin.

The impact strength of the secondary fabricate does not deteriorate after annealing the primary fabricate made from the composition of the present invention. Therefore, the compositions are widely used for the manufacture of automobile parts, electrical and electronic parts, thermal resistance containers, industrial parts, and the like.

## Claims

1. A polyester resin composition which comprises

as component (A) an aromatic polyester resin in an amount of 50 to 99 % by weight;

as component (B) an olefinic copolymer resin in an amount of 1 to 50 % by weight, the olefinic copolymer resin having a melt index of 0.1 to 100 g/10 min. and being composed of

80 to 99.9 % by mole of olefinic monomer units (b1), 0.1 to 20 % by mole of $\alpha,\beta$-unsaturated acid glycidylester monomer units (b2), and 0 to 19.9 % by mole of $\alpha,\beta$-unsaturated acid alkylester mononer units or vinyl ester monomer units (b3); and

as component (C) a low-molecular weight ethylene/$\alpha,\beta$-unsaturated acid/$\alpha,\beta$-unsaturated acid alkylester copolymer resin having a viscosity average molecular weight of 1,000 to 15,000 in an amount of 0.1 to 15 parts by weight, based on 100 parts by weight of the aforesaid resins (A) + (B), the low-molecular weight copolymer resin being composed of 80 to 99.9 % by mole of ethylene units (c1), and a total of 0.5 to 20 % by mole of $\alpha,\beta$-unsaturated acid monomer units and $\alpha,\beta$ unsaturated acid alkylester monomer units (c2).

2. A polyester resin composition which comprises

component (A) of an aromatic polyester resin in an amount of 50 to 99 % by weight;

component (B) of an olefinic copolymer resin in an amount of 1 to 50 % by weight, the olefinic copolymer resin having a melt index of 0.1 to 100 g/10 min. and being composed of

80 to 99.9 % by mole of an olefinic monomer unit (b1), 0.1 to 20 % by mole of an $\alpha,\beta$-unsaturated acid glycidylester monomer unit (b2), and 0 to 19.9 % by mole of an $\alpha,\beta$-unsaturated acid alkylester monomer unit or a vinyl ester monomer unit (b3); and

component (C) of a low-molecular weight ethylene/$\alpha,\beta$-unsaturated acid/$\alpha,\beta$-unsaturated acid alkylester copolymer resin having a viscosity average molecular weight of 1,000 to 15,000 in an amount of 0.1 to 15 parts by weight, based on 100 parts by weight of the aforesaid resins (A) + (B), the low-molecular weight copolymer resin being composed of

80 to 99.9 % by mole of an ethylene unit (c1), and a total of 0.5 to 20 % by mole of an $\alpha,\beta$-unsaturated acid monomer unit and an $\alpha,\beta$-unsaturated acid alkylester monomer unit (c2); and

component (E) of an inorganic filler in an amount of 1 to 200 parts by weight, based on 100 parts by weight of the aforesaid resins (A) + (B).

3. A polyester resin composition in accordance with claim 1 or 2, wherein the olefinic copolymer resin is at least one selected from the group consisting of ethylene/glycidyl(meth )acrylate copolymer resins, ethylene/alkyl(meth )acrylate/glycidyl(meth )acrylate copolymer resins, ethylene/vinylester/glycidyl(meth )acrylate copolymer resins.

4. A polyester resin composition in accordance with claim 3, wherein the olefinic copolymer resin is at least one selected from the group consisting of ethylene/glycidylmethacrylate copolymer resins, ethylene/ethylacrylate/glycidylmethacrylate copolymer resins, and ethylene/vinylacetate/glycidylmethacrylate copolymer resins.

5. A polyester resin composition in accordance with claim 1 or 2, wherein the proportion of the acid to the alkylester in the low-molecular weight ethylene/$\alpha,\beta$-unsaturated acid/$\alpha,\beta$-unsaturated acid alkylester copolymer resin having a viscosity average molecular weight of 1,000 to 15,000 is 10 to 90 : 90 to 10.

6. A polyester resin composition in accordance with claim 5, wherein the low-molecular weight ethylene/$\alpha,\beta$-unsaturated acid/$\alpha,\beta$-unsaturated acid alkylester copolymer resin is obtained by thermal

EP 0 511 475 A1

degradation of a high-molecular weight ethylene/$\alpha,\beta$-unsaturated acid alkylester copolymer resin.

7. A polyester resin composition in accordance with claim 6, wherein the high-molecular weight ethylene/$\alpha,\beta$-unsaturated alkylester copolymer resin is an ethylene/(meth ) acrylic acid alkylester copolymer resin.

8. A polyester resin composition in accordance with claim 7, wherein the high-molecular weight ethylene/-(metha) acrylic acid alkylester copolymer resin have a melt index of 300 g/10min. or less, and the content of the (meth )acrylic acid alkylester is in an amount of 0.5 to 25 % by mole.

9. A polyester resin composition in accordance with claim 8, wherein the high-molecular weight ethylene/-(meth ) acrylic acid alkylester copolymer resin is an ethylene/ethylacrylate copolymer resin.

10. A polyester resin composition in accordance with claim 9, wherein the low-molecular weight ethylene copolymer resin is an ethylene/acrylic acid/ethylacrylate copolymer obtained by thermal degradation of a high-molecular weight (meth )acrylic acid alkylester copolymer resin.

11. A polyester resin composition in accordance with claim 1, wherein component (A) is an aromatic polyester resin, component (B) is an ethylene/glycidylmethacrylate copolymer resin or an ethylene/ethylacrylate/glycidylmethacrylate copolymer resin, and (C) component is a low-molecular weight ethylene/acrylic acid/ethylacrylate copolymer resin.

12. A polyester resin composition in accordance with claim 2, wherein the inorganic filler is fibrous, lamellar or scaly.

13. A polyester resin composition in accordance with claim 12, wherein the inorganic filler is at least one selected from the group consisting of glass fiber, titanium whisker, and mica.

16

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,A | WO-A-9 119 767 (E.I. DU PONT DE NEMOURS AND COMPANY) <br> * claims 1,5,7-8,11-12 * <br> --- | 1-3, 12-13 | C08L67/02 <br> C08K7/00 <br> // <br> (C08L67/02, <br> 23:08, 23:08) |
| A | EP-A-0 341 731 (E.I. DU PONT DE NEMOURS AND COMPANY) <br> * claims 1,12 * <br> * page 6, line 21 - line 28 * <br> --- | 1-7, 12-13 | |
| A | WO-A-8 905 838 (NORSOLOR) <br> * claims 1-2,6 * <br> * examples 1-6 * <br> * page 5, line 22 - page 6, line 1 * <br> --- | 1-4,12- 13 | |
| A | EP-A-0 342 067 (NORSOLOR) <br> * claims 1,4,8,10 * <br> * examples 1-3,5-7 * <br> * page 3, line 27 - line 55 * <br> ----- | 1-4,12- 13 | |

TECHNICAL FIELDS SEARCHED (Int. Cl.5 )

C08L

The present search report has been drawn up for all claims

| Place of search | Date of completion of the search | Examiner |
|---|---|---|
| THE HAGUE | 21 AUGUST 1992 | K.Y.-P. Miao |

EPO FORM 1503 03.82 (P0401)